# EUROPEAN PATENT APPLICATION

(11) **EP 4 729 487 A1**
(43) Date of publication of application: **22.04.2026**
(21) Application number: 25209126.9
(22) Date of filing: 16.10.2025
(51) Int. Cl.: C01G 53/50, C01G 53/502, C01G 53/84, H01M 4/36, H01M 4/505, H01M 4/525

(54) **POSITIVE ELECTRODE ACTIVE MATERIAL AND LITHIUM SECONDARY BATTERY COMPRISING THE SAME**

(30) Priority: 18.10.2024 KR 20240142930
(71) Applicant: ECOPRO BM CO., LTD., Cheongju-si, Chungcheongbuk-do 28116 (KR)
(72) Inventor: JEON, Se Hyeon, 28116 Cheongju-si, Chungcheongbuk-do (KR); JUNG, Hyun Su, 28116 Cheongju-si, Chungcheongbuk-do (KR); LIM, Ra Na, 28116 Cheongju-si, Chungcheongbuk-do (KR); KWON, O Hyeon, 28116 Cheongju-si, Chungcheongbuk-do (KR)
(74) Representative: BCKIP Part mbB

(57) **Abstract**

The present invention relates to a positive electrode active material and a lithium secondary battery comprising the same, and more particularly, to a positive electrode active material comprising a overlithiated lithium manganese-based oxide, wherein a coating layer comprising a crystalline phase and an amorphous phase is formed on the surface of the lithium manganese-based oxide, thereby alleviating elution of transition metals from the lithium manganese-based oxide and suppressing side reactions on the surface of the lithium manganese-based oxide, and to a lithium secondary battery comprising the same.

## Description

### BACKGROUND

### 1. Field of the Invention

The present invention relates to a positive electrode active material and a lithium secondary battery comprising the same, and more particularly, to a positive electrode active material comprising a overlithiated lithium manganese-based oxide, wherein a coating layer comprising a crystalline phase and an amorphous phase is formed on the surface of the lithium manganese-based oxide, thereby alleviating elution of transition metals from the lithium manganese-based oxide and suppressing side reactions on the surface of the lithium manganese-based oxide, and to a lithium secondary battery comprising the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al are composited.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while an LiNiO₂-based positive electrode active material exhibits a battery characteristic such as high discharge capacity, due to cation mixing between Li and a transition metal, it is difficult to synthesize the LiNiO₂-based positive electrode active material, thereby causing a big problem in rate performance.

In addition, depending on the intensity of such cation mixing, a large amount of Li by-products is generated. Most of the Li by-products include LiOH and Li₂CO₃, may cause gelation in the preparation of a positive electrode paste, or cause gas generation due to repeated charging/discharging after the manufacture of an electrode. In addition, residual Li₂CO₃ among the Li by-products increases cell swelling to act as a cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the molar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate performance of a lithium secondary battery using OLO are low. As such, when the rate performance is low, there is a problem in that charge/discharge capacity and lifetime efficiency (capacity retention) are degraded during the cycling of a lithium secondary battery.

To solve the above-described problems, although various studies on changing the composition of OLO have been conducted, such attempts have not yet reached the level of commercialization.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing (of course, relatively inexpensive LFP is still used to reduce costs).

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that the electrochemical properties or stability of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

For example, the present inventors confirmed that in the case of lithium manganese-based oxide, the possibility of transition metals being eluted from the particle surface is high as charging/discharging is repeated, compared to a ternary lithium composite oxide. In particular, there is a high possibility that Mn contained in excess in the lithium manganese-based oxide will be eluted from the particle surface.

When a transition metal is eluted from the lithium manganese-based oxide, the eluted transition metal reacts with an electrolyte at the surface of the lithium manganese-based oxide, and thus impurities may be formed. These impurities not only increase the surface resistance of the lithium manganese-based oxide, but also reduce the intercalation/deintercalation efficiency of lithium ions through the lithium manganese-based oxide.

The transition metal eluted from the lithium manganese-based oxide or impurities formed by reactions of the eluted transition metal and an electrolyte may move to the negative electrode using the electrolyte as a medium and may be deposited on the surface of the negative electrode.

For example, due to side reactions with the electrolyte occurring on the surface of the lithium manganese-based oxide or structural changes (changes in crystal structure, etc.) of the lithium manganese-based oxide, Mn²⁺ included in excess in the lithium manganese-based oxide may be eluted into the electrolyte. Mn²⁺ eluted into the electrolyte may move to the surface of the negative electrode using the electrolyte as a medium during formation or charging/discharging and react with various substances (electrons, electrolytes, electrodes, or by-products, etc.) present in a battery, and as a result, impurities including Mn²⁺, Mn metal, or Mn-containing compounds (such as MnCO₃, MnO, MnF₂, etc.) are present on the surface of the negative electrode.

Transition metals or impurities deposited on the surface of the negative electrode may rapidly increase the resistance of the negative electrode, and this resistance anomaly is a major cause of accelerated deterioration of the lifetime of lithium secondary batteries.

Lithium secondary batteries using the lithium manganese-based oxide as a positive electrode active material are vulnerable to the above-described problems because they have a higher operating voltage compared to lithium secondary batteries using a commercially available ternary lithium composite oxide as a positive electrode active material.

However, there is still no technology for addressing the elution of transition metals from overlithiated lithium manganese-based oxides and the resulting problems.

As described above, compared to another commercialized type of positive electrode active material, a conventional overlithiated lithium manganese-based oxide has a disadvantage in terms of an electrochemical property and/or stability. However, the present inventor has confirmed that, when a barrier layer capable of alleviating the elution of a transition metal is formed on a surface of the lithium manganese-based oxide, the elution of a transition metal from the lithium manganese-based oxide can be suppressed or alleviated.

At the same time, the present inventor has also confirmed that although the formation of a barrier layer on a surface of the lithium manganese-based oxide can suppress the elution of a transition metal, the amount of gas generated inside a lithium secondary battery increases during long-term use. The stored gas inside the lithium secondary battery acts as a factor that degrades the lifespan of the battery.

To solve the above-described problem, it may be considered to attach a metal nanoparticle capable of capturing or scavenging stored gas or HF to a surface of the lithium manganese-based oxide. However, such a metal nanoparticle may alter a surface kinetic property of the lithium manganese-based oxide.

Accordingly, the present invention is directed to providing a positive electrode active material comprising a overlithiated lithium manganese-based oxide, wherein a coating layer comprising a crystalline phase and an amorphous phase is formed on a surface of the lithium manganese-based oxide, thereby alleviating elution of a transition metal from the lithium manganese-based oxide and suppressing a side reaction on a surface of the lithium manganese-based oxide.

The present invention is also directed to providing a positive electrode active material that can prevent a rapid increase in an amount of stored gas in a lithium secondary battery using the lithium manganese-based oxide as a positive electrode active material, by forming a coating layer comprising a crystalline phase and an amorphous phase on a surface of the lithium manganese-based oxide, unlike a conventional barrier layer.

The present invention is also directed to providing a positive electrode active material in which, instead of attaching or embedding a metal nanoparticle capable of capturing or scavenging stored gas or HF on a surface of the lithium manganese-based oxide, a coating layer comprising a crystalline phase and an amorphous phase is formed on a surface of the lithium manganese-based oxide, thereby minimizing a change in a surface kinetic property of the lithium manganese-based oxide.

According to one aspect of the present invention for solving the above-described technical problems, there is provided a positive electrode active material comprising a lithium manganese-based oxide in which a phase belonging to a C2/m space group and a phase belonging to an R-3m space group are solid-solutioned.

In general, a ternary lithium composite oxide of a nickel-cobalt-manganese (NCM) composition or a nickel-cobalt-aluminum (NCA) composition, which is commercialized, exists as a single phase belonging to the R-3m space group, whereas the overlithiated lithium manganese-based oxide defined herein is characterized by being a solid solution in which a phase belonging to the C2/m space group and a phase belonging to the R-3m space group coexist.

A coating layer is located on a surface of the lithium manganese-based oxide, and the coating layer can suppress or alleviate elution of a transition metal from the lithium manganese-based oxide while minimizing a change in a surface kinetic property of the lithium manganese-based oxide.

The lithium manganese-based oxide may be a composite oxide of lithium, nickel, and manganese. A content (mol%) of manganese in the lithium manganese-based oxide may be greater than a content (mol%) of nickel. In addition, the lithium manganese-based oxide may further include at least one element selected from an alkali metal, an alkaline earth metal, a transition metal other than nickel and manganese, a post-transition metal, and a metalloid.

The lithium manganese-based oxide may be represented by Chemical Formula 1 or Chemical Formula 2 below.

[Chemical Formula 1] Li(LiₐNi_{b}Co_{c}Mn_{d}M1_{c})O_{2-f}X_{f}

In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of oxygen present in the lithium manganese-based oxide,
0<a≤0.7, 0≤b<0.5, 0≤c≤0.2, 0.5≤d<0.8, 0<e≤0.1, and 0≤f≤0.1.

The lithium manganese-based oxide may exist as a secondary particle in which a plurality of primary particles are aggregated, and the coating layer may be located on a surface of the secondary particle. In addition, the coating layer may also be present at an interface or a gap between the primary particles located inside the secondary particle.

The coating layer includes at least one selected from an oxide of a group 13 element and a composite oxide of lithium and a group 13 element, and preferably, the coating layer includes boron and aluminum.

The coating layer may include at least one oxide selected from aluminum oxide, lithium-aluminum oxide, lithium-boron oxide, and lithium-aluminum-boron oxide. Preferably, the coating layer may include lithium-aluminum-boron oxide, or may include lithium-aluminum-boron oxide together with at least one oxide selected from aluminum oxide, lithium-aluminum oxide, and lithium-boron oxide.

In addition, according to another aspect of the present invention, there is provided a positive electrode comprising the positive electrode active material defined herein. Specifically, the positive electrode may include a positive electrode current collector and a positive electrode active material layer formed on the positive electrode current collector, and the positive electrode active material is present in the positive electrode active material layer.

Further, according to still another aspect of the present invention, there is provided a lithium secondary battery comprising the positive electrode defined herein. Specifically, the lithium secondary battery may include the positive electrode defined herein, a negative electrode, a separator interposed between the positive electrode and the negative electrode, and an electrolyte.

According to the present invention, it is possible to improve a limitation of a conventional lithium-excess lithium manganese-based oxide, which has several disadvantages in terms of an electrochemical property and/or stability as compared to a commercialized ternary lithium composite oxide of a nickel-cobalt-manganese (NCM) composition or a nickel-cobalt-aluminum (NCA) composition.

Specifically, according to the present invention, by forming a coating layer comprising a crystalline phase and an amorphous phase on a surface of the lithium manganese-based oxide, elution of a transition metal from the lithium manganese-based oxide can be suppressed or alleviated. By suppressing or alleviating elution of a transition metal from the lithium manganese-based oxide, it is possible to prevent an impurity from being formed by a reaction between an electrolyte and the transition metal eluted on a surface of the lithium manganese-based oxide.

The transition metal eluted from the lithium manganese-based oxide and/or the impurity formed by a reaction between the eluted transition metal and the electrolyte can migrate to a negative electrode through the electrolyte, and the impurity can be deposited on a surface of the negative electrode to sharply increase negative electrode resistance. That is, according to the present invention, by preventing elution of a transition metal from the lithium manganese-based oxide, it is possible to prevent acceleration of degradation of a lifespan of a lithium secondary battery due to deposition of an impurity on a positive electrode and/or a negative electrode caused by the transition metal eluted from the lithium manganese-based oxide.

In addition, according to the present invention, unlike a conventional barrier layer, by forming a coating layer comprising a crystalline phase and an amorphous phase on a surface of the lithium manganese-based oxide, it is possible to prevent a rapid increase in stored gas inside a lithium secondary battery in which the lithium manganese-based oxide is used as a positive electrode active material.

Further, the present invention, unlike a conventional barrier layer, forms a coating layer comprising a crystalline phase and an amorphous phase on a surface of the lithium manganese-based oxide instead of attaching or embedding a metal nanoparticle having a capturing or scavenging capability for stored gas or HF on a surface of the lithium manganese-based oxide, thereby minimizing a change in a surface kinetic property of the lithium manganese-based oxide and exhibiting a stable electrochemical property of the lithium secondary battery in which the lithium manganese-based oxide is used as a positive electrode active material.

In addition to the above-described effects, specific effects of the present invention will be described together with detailed matters for carrying out the invention below.

### BRIEF DESCRIPTION OF THE DRAWINGS

FIG. 1 illustrates a result of a surface EDS analysis (target element: Al) on a lithium manganese-based oxide (secondary particle) according to Example 2.
FIG. 2 illustrates a result of a surface EDS analysis (target element: Al) on a lithium manganese-based oxide (secondary particle) according to Example 4.
FIG. 3 illustrates a result of an XRD analysis on a positive electrode active material according to Example 1, Example 2, Comparative Example 1, Comparative Example 3, and Comparative Example 4.

### DETAILED DESCRIPTION OF EXEMPLARY EMBODIMENTS

For easier understanding of the present invention, certain terms are defined herein for convenience. Unless otherwise defined herein, scientific and technical terms used in the present invention will have meanings generally understood by those skilled in the art. In addition, unless otherwise specified in the context, it should be understood that the singular includes the plural, and the plural includes the singular. Amounts or ratios indicated herein are molar amounts or molar ratios, unless otherwise specified in the context.

Hereinafter, a positive electrode active material, which includes an overlithiated lithium manganese-based oxide, and a lithium secondary battery including the positive electrode active material according to some embodiments of the present invention will be described in more detail.

### Positive electrode active material

According to one aspect of the present invention, a positive electrode active material including a lithium manganese-based oxide in which a phase belonging to a C2/m space group and a phase belonging to an R3-m space group are dissolved is provided.

The phase belonging to a C2/m space group and the phase belonging to a R3-m space group may be distinguished not only through the composition of each phase, but also by a peak specific to each phase during XRD analysis. For example, the specific peak for the phase belonging to a C2/m space group may appear in the area of 2θ=20.8±1°, and the specific peak for the phase belonging to a R3-m space group may appear in the area of 2θ=18.6+1°.

As the lithium manganese-based oxide is a composite oxide in which a phase belonging to a C2/m space group and a phase belonging to a R3-m space group are dissolved, a phase belonging to a C2/m space group and a phase belonging to a R3-m space group coexist in the lithium manganese-based oxide. In other words, the lithium manganese-based oxide is a composite oxide comprising a phase belonging to a C2/m space group and a phase belonging to a R3-m space group. The phase belonging to a C2/m space group and the phase belonging to a R3-m space group can be considered to be dispersed in the remainder of the lithium manganese-based oxide. In addition, the lithium manganese-based oxide is different from a composite oxide having a spinel crystal structure belonging to an Fd-3m space group (e.g., LiMn₂O₄ or an oxide having a similar composition thereto).

The lithium manganese-based oxide may be a composite oxide of lithium, nickel, and manganese. In addition, the lithium manganese-based oxide may further include at least one element selected from an alkali metal, an alkaline earth metal, a transition metal other than nickel and manganese, a post-transition metal, and a metalloid.

The lithium manganese-based oxide may also be referred to an overlithiated layered oxide (OLO) because the equivalent weight of lithium present in the lithium manganese-based oxide is larger than the sum of the equivalent weight of other transition metals (generally, when the molar ratio (Li/Metal molar ratio) of lithium to all metal elements, other than lithium, in the lithium manganese-based oxide is larger than 1).

In addition, the lithium manganese-based oxide is also referred to an overlithiated layered oxide with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has a content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5.

Accordingly, in the present disclosure, the lithium manganese-based oxide may be defined as a composite oxide in which a content of manganese is 50 mol% or more among all metal elements excluding lithium, or may be defined as a composite oxide in which a content of manganese is 50 mol% or more among all metal elements excluding lithium and a content of nickel is less than 50 mol%.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese is 50 mol% or more and the content of nickel is less than 50 mol%, among all metal elements, excluding lithium.

Despite the differences in composition described above, the lithium manganese-based oxide may also serve as a composite metal oxide capable of intercalation/deintercalation of lithium ions.

The lithium manganese-based oxide included in the positive electrode active material defined herein may be present as an aggregate in which a plurality of primary particles are aggregated. When the lithium manganese-based oxide is present as an aggregate in which a plurality of primary particles are aggregated, the lithium manganese-based oxide may be referred to as a secondary particle.

The primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter of 0.05 µm to 5 µm, 0.05 µm to 1.0 µm, 0.1 µm to 1.0 µm, or 0.25 µm to 0.75 µm. In this case, the average particle diameter of the primary particle may be determined by using an average value of a length in a major-axis direction and a length in a minor-axis direction ([major-axis length + minor-axis length]/2). The average particle diameter of the primary particle may be calculated as an average value of particle diameters of all primary particles observed from a surface SEM image and/or a cross-sectional SEM image of the lithium manganese-based oxide.

When an average particle diameter of the primary particle is less than 0.05 µm, a specific surface area of the lithium manganese-based oxide (secondary particle) composed of the primary particle is relatively large. In this case, a possibility of a side reaction between the lithium manganese-based oxide and an electrolyte during storage or operation of a lithium secondary battery may increase.

On the other hand, when the average particle diameter of the primary particle is greater than 5 µm, since growth of the primary particle is excessively induced, a diffusion path of lithium ions in the primary particle also becomes longer. When the diffusion path of lithium ions in the primary particle is excessively long, mobility of lithium ions in the primary particle and diffusivity of lithium ions mediated by the primary particle are reduced, which becomes a cause of increasing resistance of the lithium manganese-based oxide (secondary particle) composed of the primary particle.

Accordingly, in order to reduce the specific surface area of the lithium manganese-based oxide and simultaneously prevent a reduction in lithium ion mobility in the primary particle and lithium ion diffusivity mediated by the primary particle, the average particle diameter of the primary particle may be 0.05 µm to 5 µm, 0.05 µm to 1.0 µm, 0.1 µm to 1.0 µm, or 0.25 µm to 0.75 µm.

An average particle diameter (D₅₀) of the secondary particle may be 1.0 µm to 24.0 µm. The average particle diameter (D₅₀) of the secondary particle may vary depending on a number of primary particles constituting the secondary particle. The average particle diameter of the secondary particle may be measured by using a laser diffraction method. For example, after dispersing the secondary particle in a dispersion medium, the particle may be introduced into a commercially available laser diffraction particle size analyzer (for example, Microtrac MT 3000), irradiated with ultrasonic waves of about 28 kHz at an output of 60 W, and then a volume cumulative particle size distribution graph may be obtained, and a particle size corresponding to 50% of the cumulative volume may be obtained to measure the average particle diameter.

For example, the lithium manganese-based oxide defined herein may be used as a positive electrode active material exhibiting a bimodal-type or trimodal-type particle size distribution to improve energy density per insufficient unit volume. Accordingly, the lithium manganese-based oxide defined herein may be used as a small particle and/or a large particle of a positive electrode active material exhibiting a bimodal-type particle size distribution, or may be used as a small particle, a medium particle (a particle having an average particle diameter between the small particle and the large particle), and/or a large particle of a positive electrode active material exhibiting a trimodal-type particle size distribution.

When the lithium manganese-based oxide defined herein is used as a small particle of a positive electrode active material exhibiting a bimodal-type particle size distribution or a trimodal-type particle size distribution, the average particle diameter (D₅₀) of the secondary particle may be 1 µm to 8 µm, or 2 µm to 6 µm, or 2 µm to 5 µm.

When the lithium manganese-based oxide defined herein is used as a large particle of a positive electrode active material exhibiting a bimodal-type particle size distribution or a trimodal-type particle size distribution, the average particle diameter (D₅₀) of the secondary particle may be 5.0 µm to 24.0 µm, 6.0 µm to 20.0 µm, 6.0 µm to 18.0 µm, 6.0 µm to 16.0 µm, or 6.0 µm to 15.0 µm.

When the lithium manganese-based oxide defined herein is used as a medium particle of a positive electrode active material exhibiting a trimodal-type particle size distribution, an average particle diameter (D₅₀) of the secondary particle may be 5.0 µm to 15.0 µm, 5.0 µm to 10.0 µm, or 5.0 µm to 8.0 µm.

In the present disclosure, the term "particle size" is used in the same meaning as "particle diameter" or "particle size diameter," and unless otherwise defined, all "average particle diameters" refer to median volume-based particle diameters determined by a laser diffraction method.

Unless otherwise defined, the term "surface of the primary particle" used herein refers to an outer surface of the primary particle exposed to the outside. Similarly, the term "surface of the secondary particle" used herein refers to an outer surface of the secondary particle exposed to the outside. As described above, the "surface of the secondary particle" formed by aggregation of a plurality of primary particles corresponds to exposed surfaces of the primary particles present at a surface portion of the secondary particle.

In addition, unless otherwise defined, the term "surface portion of a particle" used herein refers to a region relatively close to an "outermost surface" of the particle, and the term "center portion of a particle" refers to a region relatively close to a "center" of the particle than the "surface portion." Accordingly, a "surface portion of a primary particle" refers to a region relatively close to an "outermost surface" of the primary particle, and a "center portion of a primary particle" refers to a region relatively close to a "center" of the primary particle than the "surface portion." Similarly, a "surface portion of a secondary particle" refers to a region relatively close to an "outermost surface" of the secondary particle, and a "center portion of a secondary particle" refers to a region relatively close to a "center" of the secondary particle than the "surface portion."

Here, a region of any particle other than the "surface portion of the particle" can be defined as a "center portion of the particle."

In the present disclosure, when a semi-diameter of the lithium manganese-based oxide measured from a cross-sectional SEM image of the lithium manganese-based oxide is referred to as r, a region where a distance (d) from a center of the lithium manganese-based oxide satisfies (1/2)r < d can be defined as a surface portion, and a region where a distance (d) from a center of the lithium manganese-based oxide satisfies 0 ≤ d ≤ (1/2)r can be defined as a center portion. Here, the lithium manganese-based oxide is assumed to be a secondary particle.

Since the secondary particle may not have a perfect spherical shape, the semi-diameter (r) of the secondary particle can be calculated from an average value of a major-axis length and a minor-axis length of the lithium manganese-based oxide measured from a cross-sectional SEM image of the secondary particle. That is, the semi-diameter (r) of the secondary particle can be regarded as half of an average value of a major-axis length and a minor-axis length of the lithium manganese-based oxide measured from a cross-sectional SEM image of the secondary particle.

The lithium manganese-based oxide may be represented by Chemical Formula 1 or Chemical Formula 2 below.

[Chemical Formula 1] Li(LiₐNi_{b}Co_{c}Mn_{d}M1_{c})O_{2-f}X_{f}

In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of oxygen present in the lithium manganese-based oxide,
0<a≤0.7, 0≤b<0.5, 0≤c≤0.2, 0.5≤d<0.8, 0<e≤0.1, and 0≤f≤0.1.

[Chemical Formula 2] rLi₂MnO₃₋ₚXₚ·(1-r)LiᵤNi_{w}CoₓMn_{y}M2_{z}O_{2-p'}X'_{p'}

In Chemical Formula 2,
M2 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X and X' are each independently a halogen capable of substituting a portion of oxygen present in the lithium manganese-based oxide,
0.2<r≤0.7, 0<u≤1, 0≤w≤1, 0≤x≤0.2, 0.3<y<1, 0<z≤0.1, 0≤p≤0.1, and 0≤p'≤0.1.

In Chemical Formula 1 and Chemical Formula 2, X and X' are each independently a halogen element capable of substituting a portion of oxygen present in the lithium manganese-based oxide. Types of halogen usable as X and X' may be referred to in the periodic table, and F, Cl, Br, and/or I may be used, and preferably, F may be used.

In Chemical Formula 1 and Chemical Formula 2, M1 and M2 are each independently at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd; at least one selected from Al, P, Nb, B, Si, Ti, Zr, Ba, K, Mo, Ca, Mg, W, Ce, V, Ta, and Y; or at least one selected from Al, P, B, Si, Ti, Zr, and W.

The Li/Metal molar ratio measured from the lithium manganese-based oxide represented by Chemical Formula 1 or Chemical Formula 2 may be greater than 1, may be 1.1 to 1.6, may be 1.1 to 1.5, may be 1.2 to 1.6, or may be 1.2 to 1.5. The Li/Metal molar ratio measured from the lithium manganese-based oxide must be greater than at least 1 in order to form a lithium-excess lithium manganese-based oxide. In addition, in order to appropriately form a solid solution in which a phase belonging to a C2/m space group and a phase belonging to an R-3m space group are solid-solutioned and to exhibit high capacity under a high-voltage operating environment, it is preferable that the Li/Metal molar ratio of the lithium manganese-based oxide be 1.1 to 1.5, 1.2 to 1.6, or 1.2 to 1.5.

In addition, in order to appropriately form a solid solution in which a phase belonging to a C2/m space group and a phase belonging to an R-3m space group are solid-solutioned, it is preferable that a content of manganese among all metal elements other than lithium present in the lithium manganese-based oxide represented by Chemical Formula 1 or Chemical Formula 2 be 50 mol% or more.

In order for the lithium manganese-based oxide to have a characteristic of an OLO that exhibits high capacity under a high-voltage operating environment, a content of manganese among all metal elements other than lithium present in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% or more and 75 mol% or less, 51 mol% or more and 75 mol% or less, 52 mol% or more and 75 mol% or less, 53 mol% or more and 75 mol% or less, 54 mol% or more and 75 mol% or less, or 55 mol% to 75 mol%. When a content of manganese in the lithium manganese-based oxide exceeds 80 mol%, a phase transition may occur due to migration of a transition metal (particularly manganese) in the lithium manganese-based oxide during formation and/or operation of a lithium secondary battery. Such a phase transition forms a spinel phase, and the spinel phase acting as an impurity in the lithium manganese-based oxide may cause a decrease in charge/discharge capacity or voltage decay during cycling of the lithium secondary battery. In addition, when a content of manganese in the lithium manganese-based oxide exceeds 80 mol%, it may be difficult to sufficiently form a phase belonging to the R-3m space group.

In order to appropriately form a solid solution in which a phase belonging to a C2/m space group and a phase belonging to an R-3m space group are solid-solutioned, a content of nickel among all metal elements other than lithium present in the lithium manganese-based oxide represented by Chemical Formula 1 or Chemical Formula 2 may be 0% or more and less than 50 mol%, 5 mol% or more and 48 mol% or less, 10 mol% or more and 46 mol% or less, 15 mol% or more and 45 mol% or less, 20 mol% or more and 44 mol% or less, 20 mol% or more and 42 mol% or less, or 20 mol% or more and 40 mol% or less. When a content of nickel in the lithium manganese-based oxide is 50 mol% or more, it may be difficult to sufficiently form the C2/m phase, or a sufficient solid solution of a phase belonging to a C2/m space group and a phase belonging to an R-3m space group may not be formed, thereby causing phase separation during formation and/or operation of a lithium secondary battery.

The lithium manganese-based oxide represented by Chemical Formula 1 or Chemical Formula 2 may selectively include cobalt. When the lithium manganese-based oxide includes cobalt, a mole fraction of cobalt relative to a total number of moles of metal elements in the lithium manganese-based oxide may be 20% or less, 15% or less, or 10% or less. In another case, the lithium manganese-based oxide represented by Chemical Formula 1 or Chemical Formula 2 may have a cobalt-free composition in which cobalt is not included.

In general, a commercialized ternary lithium composite oxide of a nickel-cobalt-manganese (NCM) composition or a nickel-cobalt-aluminum (NCA) composition exists as a single phase belonging to the R-3m space group.

In contrast, the lithium-excess lithium manganese-based oxide represented by Chemical Formula 1 or Chemical Formula 2 exists as a composite oxide in which an oxide of a phase belonging to a C2/m space group represented by (hereinafter referred to as "C2/m phase") and an oxide of a phase belonging to an R-3m space group represented by (1-r)LiᵤNi_{w}CoₓMn_{y}M2_{z}O_{2-p'}X'_{p'} (hereinafter referred to as "R-3m phase") are solid-solutioned. For example, the lithium manganese-based oxide may exist in a state in which the oxide of the C2/m phase and the oxide of the R-3m phase form a solid solution.

In this case, a composite oxide in which a phase belonging to a C2/m space group and a phase belonging to an R-3m space group are merely physically and/or chemically bonded or attached does not correspond to the solid solution defined herein.

For example, a composite oxide having a phase belonging to the C2/m space group, whose surface is coated with a metal oxide having a phase belonging to the R3-m space group, which is formed by mixing a metal oxide having a phase belonging to the C2/m space group and a metal oxide having a phase belonging to the R3-m space group, does not correspond to a solid solution as defined herein.

In the overlithiated lithium manganese-based oxide represented by Chemical Formula 2, when r exceeds 0.7, a ratio of Li₂MnO₃, which is an oxide of a phase belonging to a C2/m space group in the lithium manganese-based oxide, becomes excessively high, and as a result, irreversible capacity and resistance of the positive electrode active material increase, thereby raising a concern of reduced discharge capacity. That is, in order to sufficiently activate an oxide of a phase belonging to a C2/m space group having relatively high resistance in the lithium manganese-based oxide and to improve surface kinetics, it is preferable that an oxide of a phase belonging to an R-3m space group be present in a predetermined ratio or more. A ratio of the phase belonging to the C2/m space group and the phase belonging to the R-3m space group in the lithium manganese-based oxide can be calculated based on a compositional ratio of lithium and a transition metal present in the lithium manganese-based oxide.

A coating layer is located on a surface of the lithium manganese-based oxide, and the coating layer can suppress or alleviate elution of a transition metal from the lithium manganese-based oxide while minimizing a change in a surface kinetic property of the lithium manganese-based oxide. By suppressing or alleviating elution of a transition metal from the lithium manganese-based oxide, the coating layer can prevent an impurity from being formed by a reaction between an electrolyte and the transition metal eluted on a surface of the lithium manganese-based oxide.

By preventing elution of a transition metal from the lithium manganese-based oxide, it is possible to prevent acceleration of degradation of a lifespan of a lithium secondary battery due to deposition of an impurity on a positive electrode and/or a negative electrode caused by the transition metal eluted from the lithium manganese-based oxide.

The coating layer includes a crystalline phase and an amorphous phase. The inclusion of the crystalline phase and the amorphous phase in the coating layer may mean that the coating layer includes a compound having a crystalline phase and a compound having an amorphous phase.

When the coating layer includes only the amorphous phase, elution of a transition metal from the lithium manganese-based oxide may be prevented for a short time, but during long-term use, an amount of gas generated in the lithium secondary battery increases, which eventually acts as a factor in reducing the lifespan of the lithium secondary battery. On the other hand, when the coating layer includes only the crystalline phase, a uniform film cannot be formed on a surface of the lithium manganese-based oxide, and thus it may be difficult to effectively suppress or alleviate elution of a transition metal from the lithium manganese-based oxide.

That is, unlike a conventional barrier layer, the coating layer including the crystalline phase and the amorphous phase can suppress or alleviate an increase in an amount of gas generated in the lithium secondary battery during long-term use.

In addition, by including the crystalline phase and the amorphous phase, the coating layer can minimize a change in a surface kinetic property of the lithium manganese-based oxide.

When the lithium manganese-based oxide is a secondary particle formed by aggregation of a plurality of primary particles, the coating layer may be present on a surface of the primary particle and/or the secondary particle. The coating layer can diffuse from a surface portion of the secondary particle toward a center portion of the secondary particle along a grain boundary between the primary particles.

The coating layer located inside the secondary particle may be present at an interface or a gap between the primary particles. The interface between the primary particles means a grain boundary formed by adjacent primary particles being in contact with each other. The gap between the primary particles means a space between adjacent primary particles that are not in direct contact with each other, and may also be referred to as a pore.

The coating layer may include at least one selected from an oxide of a group 13 element and a composite oxide of lithium and a group 13 element.

In addition, the coating layer may include boron and aluminum. In this case, a molar ratio (B/Al) of boron to aluminum in the positive electrode active material is preferably 0.2 or more and 2.0 or less, 0.25 or more and 2.0 or less, 0.25 or more and 1.75 or less, or 0.4 or more and 1.6 or less. The molar ratio of boron to aluminum present in the positive electrode active material may be calculated from contents (mol%) of boron and aluminum used in a manufacturing process of the positive electrode active material, or may be calculated from contents (mol%) of boron and aluminum measured by ICP analysis or EDS analysis of the positive electrode active material.

When the molar ratio (B/Al) of boron to aluminum in the positive electrode active material is 0.2 or less, it may be difficult to effectively suppress or alleviate elution of a transition metal from the lithium manganese-based oxide because an amorphous phase in the coating layer cannot be properly formed. In addition, when an excessive amount of crystalline phase is formed in the coating layer, there is a concern that electrochemical properties of the positive electrode active material may be degraded due to a change in surface resistance caused by the coating layer. On the other hand, when the molar ratio (B/Al) of boron to aluminum in the positive electrode active material exceeds 2.0, there is a concern that an amount of gas generated in the lithium secondary battery during long-term use may increase because a crystalline phase in the coating layer cannot be properly formed.

The coating layer may include at least one oxide selected from aluminum oxide, lithium-aluminum oxide, lithium-boron oxide, and lithium-aluminum-boron oxide. Preferably, the coating layer may include lithium-aluminum-boron oxide, or may include lithium-aluminum-boron oxide together with at least one oxide selected from aluminum oxide, lithium-aluminum oxide, and lithium-boron oxide. In addition, it is preferable that the coating layer does not include boron oxide not composited with lithium (for example, HBO₂, which is an intermediate product of a reaction of a boron-containing raw material).

An oxide present in the coating layer may be represented by Chemical Formula 3 below.

[Chemical Formula 3] Li_{g}M3ₕOᵢ

In Chemical Formula 3, M3 is at least one selected from Al and B, 0 ≤ g ≤ 8, 0 ≤ h ≤ 15, and 2 ≤ i ≤ 20, with the exception of a case in which h and i are both 0. In addition, in Chemical Formula 3, g, h, and i represent numbers determined from a stoichiometric ratio according to a valence of M3. For example, g, h, and i may each be appropriately selected from ranges of 0 ≤ g ≤ 8, 0 ≤ h ≤ 8, and 2 ≤ i ≤ 13.

More specifically, the oxide represented by Chemical Formula 3 may be Li_{g}AlₕOᵢ, Li_{g}BₕOᵢ, Li_{g}(Al/B)ₕOᵢ, or AlₕOᵢ, and non-limiting examples thereof include Al₂O₃, Li₅AlO₄, LiBO₂, Li₂B₄O₇, Li₃BO₃, Li₂B₅AlO₁₀, LiB₄Al₇O₁₇, and Li₃AlB₂O₆.

Among the oxides, aluminum oxide, lithium-aluminum oxide, and lithium-aluminum-boron oxide are crystalline phases, and lithium-boron oxide may be an amorphous phase.

The coating layer may be present in a film form having an average film thickness of 1 nm to 300 nm, 10 nm to 200 nm, or 30 nm to 100 nm on a surface of the lithium manganese-based oxide. A thickness of the coating layer may be measured through EDX analysis for a coating element based on a cross-sectional SEM image of the lithium manganese-based oxide. The fact that the coating layer is present in a film form should be distinguished from a case in which an oxide constituting the coating layer is dispersed and attached in the form of individual particles on the surface of the lithium manganese-based oxide.

When the average film thickness of the coating layer is less than 1 nm, it may be difficult to alleviate elution of a transition metal from the lithium manganese-based oxide and to suppress a side reaction on the surface of the lithium manganese-based oxide. On the other hand, when the average film thickness of the coating layer is greater than 300 nm, there is a concern that surface kinetics of the lithium manganese-based oxide may deteriorate or electrical conductivity may decrease.

### Lithium secondary battery

According to another aspect of the present invention, a positive electrode that includes a positive electrode current collector and a positive electrode active material layer formed on the positive electrode current collector may be provided. The positive electrode active material layer may include a lithium manganese-based oxide having a barrier layer formed on at least a part of the surface as a positive electrode active material according to the above-described embodiments of the present invention. In addition, the barrier layer and metal-containing nanoparticles may be independently present on the surface of the lithium manganese-based oxide.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element, (wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed to be limited by these examples.

### Preparation Example 1. Preparation of positive electrode active material

### Comparative Example 1

### (a) Preparation of Precursor

An aqueous solution in which NiSO₄·6H₂O, CoSO₄·6H₂O, and MnSO₄·H₂O were mixed at a molar ratio of 40:2:58, NaOH (aq), and NH₄OH (aq) were added to a reactor and stirred. A temperature in the reactor was maintained at 45°C, and a precursor synthesis reaction was carried out for 24 hours while introducing N₂ gas into the reactor. After the reaction was completed, the precursor was separated, washed with deionized water, and dried at 120°C for 10 hours to obtain a Ni_{0.4}Co_{0.02}Mn_{0.58}(OH)₂ precursor having an average particle diameter (D₅₀) of 12 µm. The average particle diameter (D₅₀) of the precursor was measured by a laser diffraction method.

### (b) First Heat Treatment

An oxide precursor was obtained by heat-treating the Ni_{0.4}Co_{0.02}Mn_{0.58}(OH)₂ precursor obtained in step (a) at 500°C for 6 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.22) as a lithium raw material.

Subsequently, a lithium manganese-based oxide in which a phase belonging to a C2/m space group and a phase belonging to an R-3m space group were present as a solid solution was obtained by heat-treating at 850°C for 8 hours in a calcination furnace under an O₂ atmosphere and then performing furnace cooling.

### (d) Third Heat Treatment

The lithium manganese-based oxide obtained in step (c) and H₃BO₃ (weighed such that a boron content based on all metal elements other than lithium in the lithium manganese-based oxide was 0.4 mol%) were mixed and heat-treated at 350°C for 8 hours in a calcination furnace under an O₂ atmosphere, followed by classification and pulverization, to obtain a positive electrode active material comprising a lithium manganese-based oxide having a boron-containing coating layer formed on its surface.

### Comparative Example 2

A positive electrode active material was prepared in the same manner as in Comparative Example 1, except that in step (d) of Comparative Example 1, the third heat treatment temperature was set to 450°C.

### Comparative Example 3

A positive electrode active material was prepared in the same manner as in Comparative Example 1, except that in step (d) of Comparative Example 1, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.5 mol%) were mixed and heat-treated at 350°C.

### Comparative Example 4

A positive electrode active material was prepared in the same manner as in Comparative Example 1, except that in step (d) of Comparative Example 1, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.5 mol%) were mixed and heat-treated at 400°C.

### Example 1

### (a) Preparation of Precursor

An aqueous solution in which NiSO₄·6H₂O, CoSO₄·6H₂O, and MnSO₄·H₂O were mixed at a molar ratio of 40:2:58, NaOH (aq), and NH₄OH (aq) were added to a reactor and stirred. A temperature in the reactor was maintained at 45°C, and a precursor synthesis reaction was carried out for 24 hours while introducing N₂ gas into the reactor. After the reaction was completed, the precursor was separated, washed with deionized water, and dried at 120°C for 10 hours to obtain a Ni_{0.4}Co_{0.02}Mn_{0.58}(OH)₂ precursor having an average particle diameter (D₅₀) of 12 µm. The average particle diameter (D₅₀) of the precursor was measured by a laser diffraction method.

### (b) First Heat Treatment

An oxide precursor was obtained by heat-treating the Ni_{0.4}Co_{0.02}Mn_{0.58}(OH)₂ precursor obtained in step (a) at 500°C for 6 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.22) as a lithium raw material. Subsequently, a lithium manganese-based oxide in which a phase belonging to a C2/m space group and a phase belonging to an R-3m space group were present as a solid solution was obtained by heat-treating at 850°C for 8 hours in a calcination furnace under an O₂ atmosphere, followed by furnace cooling.

### (d) Third Heat Treatment

The lithium manganese-based oxide obtained in step (c), H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.5 mol%) were mixed and heat-treated at 450°C for 8 hours in a calcination furnace under an O₂ atmosphere, followed by classification and pulverization, to obtain a positive electrode active material comprising a lithium manganese-based oxide having a boron-containing coating layer formed on its surface.

### Example 2

A positive electrode active material was prepared in the same manner as in Example 1, except that in step (d) of Example 1, the third heat treatment temperature was set to 500°C.

### Example 3

A positive electrode active material was prepared in the same manner as in Example 1, except that in step (d) of Example 1, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 2.0 mol%) were mixed.

### Example 4

A positive electrode active material was prepared in the same manner as in Example 1, except that in step (d) of Example 1, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.2 mol%) were mixed.

### Comparative Example 5

### (a) Preparation of Precursor

An aqueous solution in which NiSO₄·6H₂O, CoSO₄·6H₂O, and MnSO₄·H₂O were mixed at a molar ratio of 40:2:58, NaOH (aq), and NH₄OH (aq) were added to a reactor and stirred. A temperature in the reactor was maintained at 45°C, and a precursor synthesis reaction was carried out for 5 hours while introducing N₂ gas into the reactor. After the reaction was completed, the precursor was separated, washed with deionized water, and dried at 120°C for 10 hours to obtain a Ni_{0.4}Co_{0.02}Mn_{0.58}(OH)₂ precursor having an average particle diameter (D₅₀) of 3 µm. The average particle diameter (D₅₀) of the precursor was measured by a laser diffraction method.

### (b) First Heat Treatment

An oxide precursor was obtained by heat-treating the Ni_{0.4}CO_{0.02}Mn_{0.58}(OH)₂ precursor obtained in step (a) at 500°C for 6 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.22) as a lithium raw material.

Subsequently, a lithium manganese-based oxide in which a phase belonging to a C2/m space group and a phase belonging to an R-3m space group were present as a solid solution was obtained by heat-treating at 850°C for 8 hours in a calcination furnace under an O₂ atmosphere and then performing furnace cooling.

### (d) Third Heat Treatment

The lithium manganese-based oxide obtained in step (c) and H₃BO₃ (weighed such that a boron content based on all metal elements other than lithium in the lithium manganese-based oxide was 0.4 mol%) were mixed and heat-treated at 350°C for 8 hours in a calcination furnace under an O₂ atmosphere, followed by classification and pulverization, to obtain a positive electrode active material comprising a lithium manganese-based oxide having a boron-containing coating layer formed on its surface.

### Comparative Example 6

A positive electrode active material was prepared in the same manner as in Comparative Example 5, except that in step (d) of Comparative Example 5, the third heat treatment temperature was set to 450°C.

### Comparative Example 7

A positive electrode active material was prepared in the same manner as in Comparative Example 5, except that in step (d) of Comparative Example 5, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.5 mol%) were mixed and heat-treated at 350°C.

### Comparative Example 8

A positive electrode active material was prepared in the same manner as in Comparative Example 5, except that in step (d) of Comparative Example 5, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.5 mol%) were mixed and heat-treated at 400°C.

### Example 5

### (a) Preparation of Precursor

An aqueous solution in which NiSO₄·6H₂O, CoSO₄·6H₂O, and MnSO₄·H₂O were mixed at a molar ratio of 40:2:58, NaOH (aq), and NH₄OH (aq) were added to a reactor and stirred. A temperature in the reactor was maintained at 45°C, and a precursor synthesis reaction was carried out for 5 hours while introducing N₂ gas into the reactor. After the reaction was completed, the precursor was separated, washed with deionized water, and dried at 120°C for 10 hours to obtain a Ni_{0.4}Co_{0.02}Mn_{0.58}(OH)₂ precursor having an average particle diameter (D₅₀) of 3 µm. The average particle diameter (D₅₀) of the precursor was measured by a laser diffraction method.

### (b) First Heat Treatment

An oxide precursor was obtained by heat-treating the Ni_{0.4}Co_{0.02}Mn_{0.58}(OH)₂ precursor obtained in step (a) at 500°C for 6 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.22) as a lithium raw material. Subsequently, a lithium manganese-based oxide in which a phase belonging to a C2/m space group and a phase belonging to an R-3m space group were present as a solid solution was obtained by heat-treating at 850°C for 8 hours in a calcination furnace under an O₂ atmosphere, followed by furnace cooling.

### (d) Third Heat Treatment

The lithium manganese-based oxide obtained in step (c), H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.5 mol%) were mixed and heat-treated at 450°C for 8 hours in a calcination furnace under an O₂ atmosphere, followed by classification and pulverization, to obtain a positive electrode active material comprising a lithium manganese-based oxide having a boron-containing coating layer formed on its surface.

### Example 6

A positive electrode active material was prepared in the same manner as in Example 5, except that in step (d) of Example 1, the third heat treatment temperature was set to 500°C.

### Example 7

A positive electrode active material was prepared in the same manner as in Example 5, except that in step (d) of Example 5, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 2.0 mol%) were mixed.

### Example 8

A positive electrode active material was prepared in the same manner as in Example 5, except that in step (d) of Example 5, lithium manganese-based oxide, H₃BO₃ (weighed such that a boron content based on all metal elements other than lithium in the lithium manganese-based oxide was 0.4 mol%), and Al₂O₃ (weighed such that an aluminum content based on all metal elements other than lithium in the lithium manganese-based oxide was 0.2 mol%) were mixed.

### Preparation Example 2. Manufacture of lithium secondary battery (full-cell)

A positive electrode slurry was prepared by dispersing 90 wt% of each positive electrode active material prepared according to Preparation Example 1, 4.5 wt% of carbon black, and 5.5 wt% of a PVDF binder in N-methyl-2 pyrrolidone (NMP).

The positive electrode slurry was uniformly applied on an aluminum thin film with a thickness of 15 µm and vacuum-dried at 135 °C to manufacture a positive electrode for a lithium secondary battery in which a positive electrode active material layer is formed.

A full-cell was manufactured by using a graphite electrode as a counter electrode to the positive electrode, a porous polyethylene membrane (Celgard 2300, thickness: 25 µm) as a separator, and an electrolyte in which LiPF₆ was present at a concentration of 1.15 M in a solvent including ethylene carbonate, dimethyl carbonate, and ethyl methyl carbonate mixed in a volume ratio of 2:4:4.

### Experimental Example 1: Analysis of Coating Layer of Positive Electrode Active Material

Among the positive electrode active materials prepared in Preparation Example 1, lithium manganese-based oxides selected from Comparative Examples 1 to 4 and Examples 1 to 4 as coarse particles were imaged by scanning electron microscopy (SEM) to obtain surface SEM images of secondary particles. Formation of a coating layer on a surface of the lithium manganese-based oxide (secondary particle) was confirmed through EDS analysis for target elements (B and Al) within the surface SEM images using Energy Dispersive X-ray Spectroscopy (EDS).

Based on the surface SEM images and SEM-EDS analysis results, it was confirmed that a coating layer containing boron was present on the surface of the lithium manganese-based oxide (secondary particle) according to Comparative Examples 1 and 2, and a coating layer containing boron and aluminum was present on the surface of the lithium manganese-based oxide (secondary particle) according to Comparative Examples 3 and 4 and Examples 1 to 4. However, in Comparative Examples 3 and 4, fine particles were observed on the surface of the lithium manganese-based oxide (secondary particle). Considering that boron forms an amorphous film on the surface of the lithium manganese-based oxide (secondary particle), the fine particles were presumed to be aluminum-derived fine particles.

Subsequently, X-ray diffraction (XRD) analysis was performed on each positive electrode active material prepared in Preparation Example 1 to identify peaks specific to coating materials present in the coating layer. The XRD analysis was conducted using a Bruker D8 Advance diffractometer with Cu-Kα radiation (1.540598 Å).

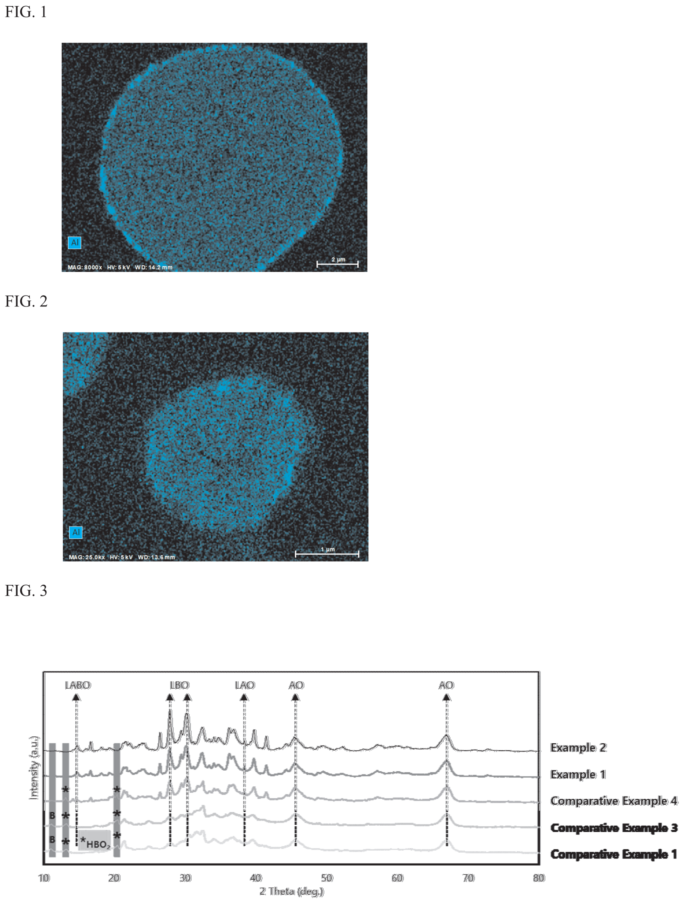

Referring to FIG. 3, which shows results of the XRD analysis, in Comparative Example 1, a peak specific to lithium-boron oxide (Li₃BO₃) exhibited low intensity, and a peak specific to HBO₂, which is an intermediate product of a reaction of a boron-containing raw material, was observed. In Comparative Example 3, peaks specific to lithium-boron oxide (Li₃BO₃) and lithium-aluminum oxide (Li₅AlO₄) both exhibited low intensity, and a peak specific to HBO₂ was observed. In Comparative Example 4, peaks specific to lithium-boron oxide (Li₃BO₃) and lithium-aluminum oxide (Li₅AlO₄) were significantly detected; however, a peak specific to HBO₂ was still observed. Furthermore, none of the positive electrode active materials according to Comparative Examples 1, 3, and 4 exhibited a peak specific to lithium-aluminum-boron oxide (Li₃AlB₂O₆). That is, when the third heat treatment temperature is not sufficiently high, a coating layer in which a crystalline phase and an amorphous phase appropriately coexist is not formed, and lithium-aluminum-boron oxide in particular is not formed.

On the other hand, in Examples 1 to 4, peaks specific to aluminum oxide (Al₂O₃), lithium-boron oxide (Li₃BO₃), lithium-aluminum oxide (Li₅AlO₄), and lithium-aluminum-boron oxide (Li₃AlB₂O₆) were all significantly detected, and no peak specific to HBO₂, which is an intermediate product of a reaction of a boron-containing raw material, was observed.

Meanwhile, based on results of surface SEM imaging, SEM-EDS analysis, and XRD analysis performed on small particles of positive electrode active materials prepared in Preparation Example 1 and corresponding to Comparative Examples 5 to 8 and Examples 5 to 8, the same coating results as those of the large particles were confirmed.

### Experimental Example 2: Experiment on Elution of Transition Metals

For the lithium secondary batteries (full-cells) fabricated in Preparation Example 2, after completing a formation process of 6 cycles under conditions of 25°C, a voltage range of 2.0 V to 4.6 V, and 0.2C/0.2C using an electrochemical analyzer (Toyo, Toscat-3100), 500 charge/discharge cycles were performed under conditions of 25°C, a voltage range of 2.0 V to 4.6 V, and 1C/1C. Subsequently, each full-cell was stabilized by performing 2 charge/discharge cycles under conditions of 25°C, a voltage range of 2.0 V to 4.6 V, and 0.05C/0.05C. Thereafter, each full-cell was disassembled, the negative electrode was washed with diethyl carbonate solvent, and vacuum-dried at 60°C before being recovered.

From the recovered negative electrode, only the negative electrode active material was separated from the Cu foil (current collector), and the separated negative electrode active material was subjected to ICP analysis to measure contents of Ni and Mn contained in the negative electrode active material.

The measurement results are shown in Table 1 below.

**[Table 1]**

| Classification | After formation | | | After 500 cycles of charge/discharge | | |
|---|---|---|---|---|---|---|
| | Ni (ppm) | Mn (ppm) | B (ppm) | Ni (ppm) | Mn (ppm) | B (ppm) |
| Comparative Example 1 | 65.9 | 100.7 | 168.6 | 168.3 | 551.8 | 763.7 |
| Comparative Example 3 | 68.3 | 133.4 | 160.3 | 170.6 | 548.4 | 730.7 |
| Example 1 | 64.8 | 99.8 | 70.5 | 150.0 | 542.6 | 185.2 |

Referring to the results in Table 1, it was confirmed that in the lithium secondary battery using the positive electrode active material according to Example 1, in which a coating layer including a crystalline phase and an amorphous phase was formed, the amount of eluted B was alleviated. It is presumed that B, which is an element derived from the positive electrode active material, was eluted into the electrolyte and migrated to the negative electrode through the electrolyte during charge/discharge. Such an impurity that migrated to the negative electrode can act as a cause of increasing an amount of gas generated in the lithium secondary battery during long-term use.

### Experimental Example 3: Experiment on Volume Change of Lithium Secondary Battery (Full-Cell)

For the lithium secondary batteries (full-cells) fabricated in Preparation Example 2, after completing a formation process of 6 cycles under conditions of 45°C, a voltage range of 2.0 V to 4.5 V, and 0.2C/0.2C using an electrochemical analyzer (Toyo, Toscat-3100), 500 charge/discharge cycles were performed under conditions of 45°C, a voltage range of 2.0 V to 4.5 V, and 1C/1C. After completing the 500 charge/discharge cycles, the change in volume compared to the initial full-cell was measured using an electronic densimeter (SID-220W).

The measurement results are shown in Table 2 below.

**[Table 2]**

| Classification | Volume increase rate (%) |
|---|---|
| Example 1 | 8.2 |
| Example 2 | 6.9 |
| Example 3 | 9.4 |
| Example 4 | 9.6 |
| Comparative Example 1 | 11.0 |
| Comparative Example 2 | 10.6 |
| Comparative Example 3 | 11.2 |
| Comparative Example 4 | 10.5 |
| Example 5 | 7.6 |
| Example 6 | 8.0 |
| Example 7 | 8.2 |
| Example 8 | 8.3 |
| Comparative Example 5 | 9.0 |
| Comparative Example 6 | 8.3 |
| Comparative Example 7 | 8.4 |
| Comparative Example 8 | 9.0 |

Referring to the results in Table 2, in the case of small particles among the positive electrode active materials prepared in Preparation Example 1, corresponding to Comparative Examples 5 to 8 and Examples 5 to 8, there was no significant difference in volume change. However, in the case of large particles among the positive electrode active materials prepared in Preparation Example 1, corresponding to Comparative Examples 1 to 4 and Examples 1 to 4, the volume change in Examples 1 to 4 was smaller than that in Comparative Examples 1 to 4. Furthermore, comparing the results of Examples 1 and 2 with those of Examples 3 and 4, it was confirmed that Examples 1 and 2, in which the amorphous phase and crystalline phase in the coating layer were present at an appropriate ratio, exhibited a smaller volume change than Examples 3 and 4.

### Experimental Example 4: Evaluation of Electrochemical Characteristics of Lithium Secondary Battery (Full-Cell)

For the lithium secondary batteries (full-cells) fabricated in Preparation Example 3, after completing a formation process of 6 cycles under conditions of 45°C, a voltage range of 2.0 V to 4.5 V, and 0.2C/0.2C using an electrochemical analyzer (Toyo, Toscat-3100), 500 charge/discharge cycles were performed under conditions of 45°C, a voltage range of 2.0 V to 4.5 V, and 1C/1C. After completing the 500 charge/discharge cycles, the initial (1st cycle) discharge capacity and the ratio of the discharge capacity at the 500th cycle to the initial discharge capacity (capacity retention) were measured.

The measurement results are shown in Table 3 below.

**[Table 3]**

| Classification | Initial discharge capacity (mAh/g) | Capacity retention at 500^{th} Cycle (%) |
|---|---|---|
| Example 1 | 206.0 | 81.5 |
| Example 2 | 205.8 | 81.2 |
| Example 3 | 205.3 | 81.0 |
| Example 4 | 204.7 | 80.6 |
| Comparative Example 1 | 204.9 | 79.8 |
| Comparative Example 2 | 204.3 | 81.2 |
| Comparative Example 3 | 204.7 | 79.8 |
| Comparative Example 4 | 203.2 | 80.3 |
| Example 5 | 206.3 | 81.8 |
| Example 6 | 204.3 | 81.2 |
| Example 7 | 203.4 | 80.7 |
| Example 8 | 203.2 | 80.5 |
| Comparative Example 5 | 201.2 | 79.6 |
| Comparative Example 6 | 203.4 | 73.9 |
| Comparative Example 7 | 201.4 | 79.0 |
| Comparative Example 8 | 200.7 | 79.2 |

Referring to the results in Table 3, in the case of large particles among the positive electrode active materials prepared in Preparation Example 1, corresponding to Comparative Examples 1 to 4 and Examples 1 to 4, there was no significant difference in initial discharge capacity and capacity retention. However, in the case of small particles among the positive electrode active materials prepared in Preparation Example 1, corresponding to Comparative Examples 5 to 8 and Examples 5 to 8, it was confirmed that Examples 5 to 8 exhibited improved initial discharge capacity and capacity retention compared to Comparative Examples 5 to 8. Furthermore, comparing the results of Examples 5 and 6 with those of Examples 7 and 8, it was confirmed that Examples 5 and 6, in which the amorphous phase and crystalline phase in the coating layer were present at an appropriate ratio, exhibited improved initial discharge capacity and capacity retention compared to Examples 7 and 8.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising:
a lithium manganese-based oxide in which a phase belonging to a C2/m space group and a phase belonging to an R-3m space group are present as a solid solution; and
a coating layer located on a surface of the lithium manganese-based oxide,
wherein the coating layer comprises a crystalline phase and an amorphous phase.

2. The positive electrode active material of claim 1, wherein the lithium manganese-based oxide is a composite oxide of lithium, nickel, and manganese.

3. The positive electrode active material of any one of claims 1 or 2, wherein a content (mol%) of manganese in the lithium manganese-based oxide is greater than a content (mol%) of nickel.

4. The positive electrode active material of any one of claims 1 to 3, wherein the lithium manganese-based oxide further comprises at least one element selected from alkali metals, alkaline earth metals, transition metals other than nickel and manganese, post-transition metals, and metalloids.

5. The positive electrode active material of any one of claims 1 to 4, wherein the lithium manganese-based oxide is represented by Chemical Formula 1 or Chemical Formula 2 below:
[Chemical Formula 1] Li(LiₐNi_{b}Co_{c}Mn_{d}M1_{c})O_{2-f}X_{f}
In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of oxygen present in the lithium manganese-based oxide,
0<a≤0.7, 0≤b<0.5, 0≤c≤0.2, 0.5≤d<0.8, 0<e≤0.1, and 0≤f≤0.1.
[Chemical Formula 2] rLi₂MnO₃₋ₚXₚ·(1-r)LiᵤNi_{w}CoₓMn_{y}M2_{z}O_{2-p'}X'_{p'}
In Chemical Formula 2,
M2 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X and X' are each independently a halogen capable of substituting a portion of oxygen present in the lithium manganese-based oxide,
0.2<r≤0.7, 0<u≤1, 0≤w≤1, 0≤x≤0.2, 0.3<y<1, 0<z≤0.1, 0≤p≤0.1, and 0≤p'≤0.1.

6. The positive electrode active material of any one of claims 1 to 5, wherein the lithium manganese-based oxide is present as a secondary particle in which a plurality of primary particles are aggregated, and
the coating layer is located on a surface of the secondary particle.

7. The positive electrode active material of any one of claims 1 to 6, wherein the lithium manganese-based oxide is present as a secondary particle in which a plurality of primary particles are aggregated, and
the coating layer is present at an interface or a gap between the primary particles inside the secondary particle.

8. The positive electrode active material of any one of claims 1 to 7, wherein the coating layer comprises at least one selected from oxides of Group 13 elements and composite oxides of lithium and Group 13 elements.

9. The positive electrode active material of any one of claims 1 to 8, wherein the coating layer comprises boron and aluminum.

10. The positive electrode active material of any one of claims 1 to 9, wherein a molar ratio (B/Al) of boron to aluminum in the positive electrode active material is 0.2 or more and 2.0 or less.

11. The positive electrode active material of any one of claims 1 to 10, wherein the coating layer comprises lithium-aluminum-boron oxide.

12. The positive electrode active material of any one of claims 1 to 11, wherein the coating layer comprises at least one oxide selected from aluminum oxide, lithium-aluminum oxide, and lithium-boron oxide, and comprises lithium-aluminum-boron oxide.

13. The positive electrode active material of any one of claims 1 to 12,
wherein the coating layer comprises aluminum oxide, lithium-aluminum oxide, lithium-boron oxide, and lithium-aluminum-boron oxide.

14. A positive electrode comprising the positive electrode active material of any one of claims 1 to 13.

15. A lithium secondary battery comprising the positive electrode of claim 15.
